# EUROPÄISCHE PATENTSCHRIFT

(11) **EP 0 330 981 B1**
(45) Veröffentlichungstag und Bekanntmachung des Hinweises auf die Patenterteilung: **11.08.1993**
(21) Anmeldenummer: 89103048.8
(22) Anmeldetag: 22.02.1989
(51) Int. Cl.: H02J 7/10

(54) **Verfahren zum Laden von wiederaufladbaren Batterien**
Method for charging rechargeable batteries
Procédé de charge de batteries rechargeables

(30) Priorität: 03.03.1988 DE 3806865
(43) Veröffentlichungstag der Anmeldung: 06.09.1989
(73) Patentinhaber: THEO BENNING ELEKTROTECHNIK UND ELEKTRONIK GMBH & CO. KG, D-46397 Bocholt (DE)
(72) Erfinder: Steinig, Walter, D-4290 Bocholt (DE)
(74) Vertreter: Stenger, Watzke & Ring Patentanwälte

(56) Entgegenhaltungen:
- DE-A- 3 506 261
- FR-A- 2 274 156
- FR-A- 2 358 767
- US-A- 3 427 523
- US-A- 3 927 361
- US-A- 4 052 656
- US-A- 4 433 277

## Beschreibung

Die Erfindung betrifft ein Verfahren zum Laden von wiederaufladbaren Batterien mittels eines Ladegerätes und insbesondere zum Laden von Bleiakkumulatoren, vorzugsweise in wartungsfreier, verschlossener Ausführung.

Das Laden von wiederaufladbaren Batterien erfolgt entweder mit ungeregelter, gesteuerter oder geregelter Kennlinie für den Ladestrom- und Spannungsverlauf. Bei einfachen Ladeverfahren nach der sogenannten W-Kennlinie (Widerstandskennlinie) erfolgt eine ungeregelte Ladung entsprechend der mit zunehmendem Füllungsgrad der Batterie ansteigenden Gegenspannung mit kontinuierlich abnehmendem Ladestrom. Dies hat neben einer langen Ladezeit den Nachteil, daß der Ladevorgang stark von Schwankungen der Netzspannung abhängt. Zur Vermeidung dieser Nachteile ist es bekannt, mit einer gesteuerten Kennlinie zu laden, bei der die Netzspannungsänderungen durch einen magnetischen Spannungskonstanthalter ausgeglichen werden (DE-PS 29 08 544).

Eine weitere Verbesserung ergibt sich, wenn mit einer geregelten Kennlinie geladen wird. Hierfür ist beispielsweise die sogenannte IU-Kennlinie bekannt, bei der über bestimmte Zeitabschnitte der Ladestrom bzw. die Ladespannung konstant gehalten werden, so daß außer Netzspannungsschwankungen Änderungen der Batteriegegenspannung ausgeregelt werden.

In letzter Zeit werden insbesondere für Flurfördergeräte Traktionsbatterien verwendet, die wartungsfrei, das heißt verschlossen ausgeführt sind. Die Wiederaufladung dieser Batterien mit herkömmlichen Ladegeräten bereitet jedoch Schwierigkeiten, da während des Ladevorganges keine so starke Gasung auftreten darf, daß der zulässige Innendruck in den verschlossenen Batteriezellen überstiegen wird. Damit konnten geschlossene Batterien bisher nur unter Anwendung von Ladeverfahren mit geregelter Kennlinie aufgeladen werden.

In der FR-A 2 274 156 ist ein Verfahren zum Laden von Batterien offenbart, bei den zur Vermeidung einer Überladung der Batterie diese nach Erreichen eines nahezu vollen Ladezustandes in einen Float-Betrieb überführt wird. Während dieses zeitlich unbegrenzten Float-Betriebes erfolgt die Steuerung des Ladestromes in Abhängigkeit vom Erreichen bestimmter, vorgegebener Spannungsgrenzen der Batteriespannung. Sobald eine vorgegebene Höchstspannung erreicht ist, erfolgt geräteintern eine Unschaltung auf einen niedrigen Ladestrom, bis nach Abfallen der Batteriespannung auf einen unteren vorgegebenen Grenzwert der Ladestrom wieder auf seinen ursprünglichen, hohen Wert angehoben wird. Hierdurch ergibt sich ein dauernder Wechsel zwischen der Batterieladung mit niedriger und mit hoher Laderate. Die die Umschaltpunkte definierenden oberen und unteren Spannungswerte können geräteintern so festgelegt werden, daß eine Überladung der Batterie in jedem Fall vermieden wird.

Bei diesem bekannten Ladeverfahren bildet der Float-Betrieb eine Nachladephase, die bei nahezu vollständiger Aufladung der Batterie einsetzt und die, da Überladungen nicht auftreten können, nahezu beliebig ausgedehnt werden kann.

Der Erfindung liegt die **Aufgabe** zugrunde, ein Ladeverfahren, insbesondere zur Aufladung von wartungsfreien, verschlossenen Batterien, zu schaffen, welches geringere Ladezeiten als bei Kontinuierlichen Ladeverfahren ermöglicht und mit dem unabhängig von der angewendeten Kennlinie der zulässige Gasungsdruck im Inneren der Batteriezellen nicht überschritten wird, so daß es zu keinem Abblasen von Gasen und damit einem die Lebensdauer der Batterie verkürzenden Elektrolyt-Verlust kommt.

Zur **Lösung** dieser Aufgabenstellung wird ein Verfahren der eingangs genannten Art vorgeschlagen, bei dem
- zu Beginn des Ladevorganges nach dem Einschalten des Ladegerätes das Aufladen der Batterie zunächst mit einem oberen Wert des Ladestromes erfolgt, bis nach Erreichen einer oberen, unterhalb der Gasungsspannung liegenden Grenzspannung der Batterie der Ladestrom auf einen unteren Wert abgesenkt wird,
- der Ladestrom wieder auf den oberen, mit zunehmender Ladung leicht abfallenden wert angehoben wird, sobald die infolge der Absenkung des Ladestromes sinkende Batteriespannung einen unteren Grenzwert erreicht hat,
- diese Vorgänge wiederholt werden, wobei sich mit zunehmender Ladezeit in dieser Pulsationsphase selbsttatig die jewilige Dauer der Einschaltzeit des Ladestromes mit dem oberen Wert verringert und die jeweilige Dauer der Einschaltzeit des Ladestromes mit dem unteren Wert erhöht,
- bei Erreichen einer bestimmten Einschaltzeit des Ladestromes mit unterem Wert die Pulsationsphase endet und eine Nachladephase einsetzt, während der ein Nachladen mit dem unteren Wert des Ladestromes für eine vorgegebene Nachladezeit erfolgt, bis der Ladestrom schließlich vollständig abgeschaltet wird.

Das erfindungsgemäße Verfahren hat den **Vorteil,** daß ein Übersteigen des zulässigen Gasdrucks in den Batteriezellen vermieden wird. Daher kann das beschriebene Verfahren auch dann mit ungeregelten Kennlinien durchgeführt werden, wenn wartungsfreie, verschlossene Bleiakkumulatoren aufgeladen werden sollen.

Durch den pulsierenden Ladestromverlauf nach Erreichen der oberen Grenzspannung wird eine Erhöhung der Stromaufnahmefähigkeit der Batterie erreicht, so daß das erfindungsgemäße Verfahren mit einer um etwa 25% geringeren Ladezeit im Verhältnis zu einem kontinuierlichen Ladeverfahren auskommt.

Ein weiterer Vorteil der Erfindung besteht darin, daß für die Durchführung der Pulsation des Ladestromes kein zusätzlicher Impulsgeber erforderlich ist, da sich nach Erreichen des oberen Grenzwertes der Batteriespannung die einzelnen Pulse zum Umschalten zwischen oberem und unterem Wert des Ladestromes selbsttätig ergeben, indem das Umschalten auf den höheren Ladestrom durch Erreichen des unteren Wertes der infolge der Absenkung des Ladestromes sinkenden Batteriespannung und das erneute Absenken des Ladestromes vom oberen auf den unteren Wert durch erneutes Erreichen der oberen Grenzspannung der Batterie bewirkt wird. Dabei können zur Aufnahme der Grenzspannungen einfache Spannungswächter verwendet werden. Zur Berücksichtigung des Gasungsverhaltens der jeweiligen Batterie kann die Empfindlichkeit der Spannungswächter eingestellt werden, wobei entweder oberer und unterer Spannungsgrenzwert getrennt eingestellt werden oder die Differenz zwischen beiden Größen eingestellt wird.

Die Vorteile des erfindungsgemäßen Verfahrens werden noch dadurch erweitert, daß der Ladevorgang mit ungeregelter Ladekennlinie erfolgt, so daß im Vergleich mit bisher benötigten Ladegeräten mit geregelter Kennlinie ein erheblich einfacheres und damit preiswerteres Ladegerät zur Verfügung steht, zumal die einzelnen Pulse nicht vom Ladegerät extra gesteuert werden, sondern sich in Abhängigkeit von den vorgegebenen Grenzwerten für die Batteriespannung von selbst ergeben, weshalb auf einen zusätzlichen Impulsgeber verzichtet werden kann.

Bei einer weiteren Ausgestaltung ist vorgesehen, daß die oberen und unteren Grenzwerte in Abhängigkeit von der Temperatur der Batterie geregelt werden. Dadurch kann der Ladevorgang noch besser an die durch den temperaturabhängig auftretenden Gasdruck gesetzte Grenze angepaßt werden. Weitere Ausgestaltungen der Erfindung ergeben sich aus den Unteransprüchen.

Weitere Einzelheiten und Vorteile des Gegenstandes der Erfindung ergeben sich aus der nachfolgenden Beschreibung der zugehörigen Zeichnungen, in denen eine bevorzugte Ausführungsform eines erfindungsgemäßen Verfahrens beschrieben ist. In den Zeichnungen zeigen:
- Fig. 1: ein Diagramm mit dem Verlauf des Ladestromes über der Zeit, wobei zusätzlich der Verlauf der Batteriespannung eingetragen ist;
- Fig. 2: ein Blockschaltbild einer ersten Ausführungsform eines nach dem Verfahren arbeitenden Batterieladesystems;
- Fig. 3: ein Blockschaltbild einer zweiten Ausführungsform eines nach dem Verfahren arbeitenden Batterieladesystems.

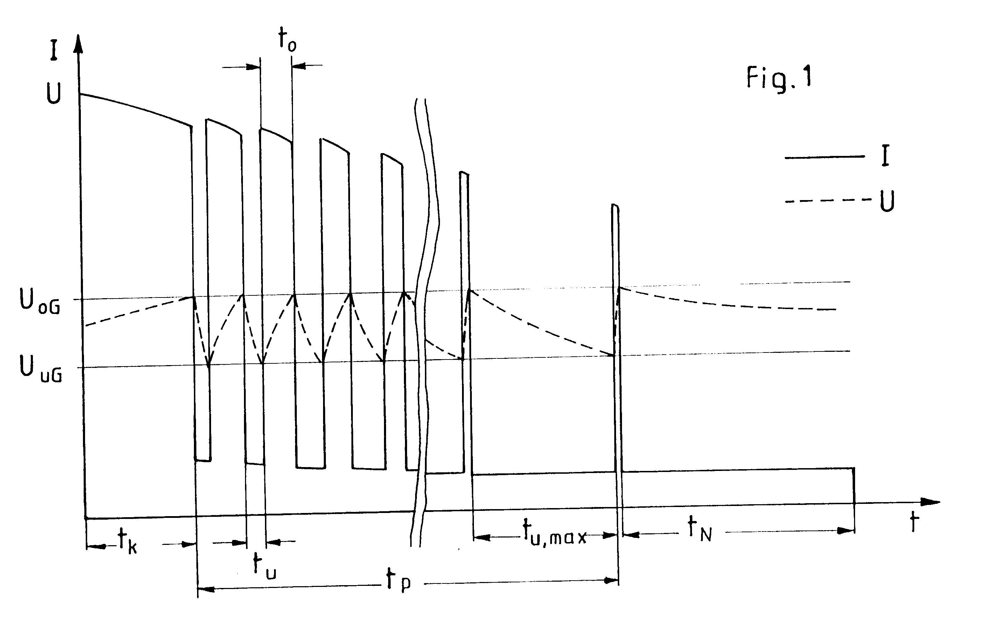

Wie aus Fig. 1 hervorgeht, beginnt nach dem Einschalten des Ladegerätes der Ladevorgang mit einem relativ hohen Ladestrom I, der sich im Laufe einer ersten Ladephase t_{K} leicht absenkt. Gleichzeitig steigt die Spannung U an der Batterie leicht an, so daß der Ladestrom I und die Batteriespannung U in dieser ersten Ladephase der Zeitdauer t_{K} gegenläufig verlaufen. Erreicht die Batteriespannung U eine im Ladegerät festgelegte obere Grenzspannung U_{oG}, so wird der Ladestrom I unterbrochen, wobei er nicht vollständig zu Null wird, sondern sich auf einen unteren Wert absenkt. Durch dieses Absenken des Ladestromes I kommt es zu einem starken Abfall der Batteriespannung U, bis diese eine ebenfalls geräteintern festgelegte untere Grenzspannung U_{uG} erreicht, wonach der Ladestrom I erneut auf seinen oberen Wert erhöht wird. Dieses wechselweise Erhöhen und Senken des Ladestromes wiederholt sich fortlaufend, wobei der Wechsel jeweils durch Erreichen entweder der oberen Grenzspannung U_{oG} oder der unteren Grenzspannung U_{uG} ausgelöst wird; erreicht die Batteriespannung die obere Grenzspannung U_{oG}, so wird der Ladestrom I auf seinen unteren Wert abgesenkt, erreicht die Batteriespannung ihre untere Grenzspannung U_{uG}, so wird der Ladestrom I auf den oberen Wert erhöht.

Der Verlauf der Batteriespannung U während der Zeit t_{P} der Pulsation ist durch ein ausgeprägtes Hystereseverhalten bestimmt. Bedingt durch die sich zunehmend aufladende Batterie fällt die Zeit tᵤ, in der die Batteriespannung von der oberen Grenzspannung U_{oG} auf die untere Grenzspannung U_{uG} abfällt, zunehmend länger aus. Gleichzeitig vermindert sich, wie in Fig. 1 dargestellt ist, die Zeit tₒ, in der die Batteriespannung von der unteren Grenzspannung U_{uG} auf die obere Grenzspannung U_{oG} ansteigt. Zum Ende der Pulsationsphase t_{P} hin verkürzt sich also die zeitliche Dauer tₒ der einzelnen Pulse mit hohem Ladestrom, während sich deren zeitlicher Abstand tᵤ gleichzeitig vergrößert.

Sobald der zeitliche Abstand tᵤ zwischen zwei benachbarten Pulsen eine festgesetzte Zeitdifferenz tᵤₘₐₓ erreicht oder überschreitet, ist damit die Pulsationsphase beendet und der Ladestrom I verharrt fortan auf dem unteren Wert. Auf diese Weise wird verhindert, daß das Batterieladegerät durch in großem zeitlichem Abstand auftretende, aber kurze Pulse belastet wird, ohne daß dies noch zur Ladung der Batterie einen nennenswerten Beitrag liefern könnte.

Nach Beendigung der Pulsationsphase mit der Dauer t_{P} setzt die Nachladephase t_{N} ein, die ihrerseits durch vollständiges Abschalten des Ladestromes I beendet wird. Dies kann auch mittels in der Batterie angeordneter Druckwächter erfolgen, so daß auch in der pulsationslosen Nachladephase t_{N} ein Übersteigen des zulässigen Gasdrucks vermieden wird.

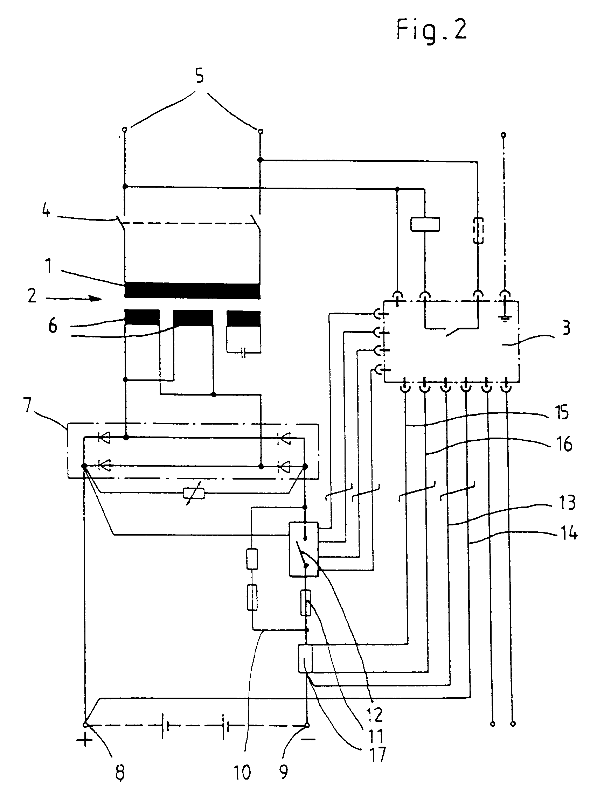

In der Fig. 2 ist ein Schaltbild für ein gemäß dem Verfahren arbeitendes Batterieladegerät dargestellt. Die Darstellung erfolgt am Beispiel eines einphasigen Gerätes. Die Primärseite 1 eines Spannungskonstanthalters 2, wie er beispielsweise in der DE-OS 26 31 974 erläutert ist, ist über ein in Abhängigkeit von Signalen einer Kontrolleinheit 3 steuerbares Netzschütz 4 an eine Netzspannung 5 anschließbar. Bei geschlossenem Netzschütz 4 wird auf einer Sekundärseite 6 des Spannungskonstanthalters 2 eine von Netzspannungsänderungen unbeeinflußte Wechselspannung erzeugt. Diese Wechselspannung wird in einer Gleichrichterbrücke 7 gleichgerichtet und liegt als Ladespannung an den Batterieklemmen 8,9 der aufzuladenden Batterie an.

Die den Minuspol bildende Batterieklemme 9 ist mit der Gleichrichterbrücke 7 über zwei, parallel zueinander verlaufende Strompfade 10,11 verbunden. Über den nicht zu unterbrechenden ersten Strompfad 10 ist, sofern das Netzschütz 4 geschlossen ist, die zu ladende Batterie dauernd an die Netzspannung 5 angeschlossen. Die Aufladung der Batterie erfolgt dabei mit dem bereits beschriebenen unteren Wert des Ladestromes I.

Im zweiten Strompfad 11 ist ein Schalter 12 angeordnet, dessen öffnende bzw. schließende Funktion durch Signale der Kontrolleinheit 3 gesteuert wird. Bei geschlossenem Schalter 12 sind der erste Strompfad 10 und der zweite Strompfad 11 parallel zueinander geschaltet, so daß die Batterie mit dem weiter oben bereits beschriebenen oberen Wert des Ladestromes I aufgeladen wird.

Zur Erfassung der Batteriespannung U verfügt die Kontrolleinheit 3 über mit den Batterieklemmen 8,9 in Verbindung stehende Leitungen 13,14. Zur Erfassung des Ladestromes I führen zwei weitere Leitungen 15,16 von der Kontrolleinheit 3 zu den beiden Anschlüsse eines Meßwiderstandes 17, der zwischen den vereinigten Strompfaden 10,11 und der den Minuspol der Batterie bildenden Batterieklemme 9 angeschlossen ist.

Vor Beginn des Batterieladeverfahrens ist das Netzschütz 4 geöffnet. Nach einem Anschluß der Schaltung an die Batterieklemmen 8,9 wird - eventuell mit zeitlicher Verzögerung - das Netzschütz 4 durch die Kontrolleinheit 3 in seine geschlossene Stellung geschaltet. Der Schalter 12 befindet sich dabei ebenfalls in seiner geschlossenen Stellung. Damit beginnt die in Fig. 1 mit t_{K} bezeichnete, erste Ladephase mit nahezu kontinuierlichem Ladestrom I. Dabei fließt der Ladestrom I durch beide, parallel zueinander verlaufenden Strompfade 10,11. Wird an den Batterieklemmen 8,9 erstmals die obere Grenzspannung U_{oG} erreicht, so schaltet die Kontrolleinheit 3 fortan auf den Lademodus "Pulsationsphase", indem durch wechselseitiges Ab- und Zuschalten des Schalters 12 beziehungsweise des Strompfades 11 die Batterie mit einer niedrigen beziehungsweise hohen Ladespannung I versorgt wird. Wird für die Dauer des unteren Wertes des Ladestromes I der Wert t_{u max} erreicht, so wird durch die Kontrolleinheit 3 der Schalter 12 endgültig in seine offene Stellung geschaltet, so daß fortan nur noch der niedrige Ladestrom I durch den ersten Strompfad 10 fließt. Damit beginnt die Nachladephase t_{N}.

Das Beenden auch der Nachladephase t_{N} erfolgt entweder in Abhängigkeit von der Größe der vorangehenden Pulsfrequenz oder nach Überschreitung eines festgesetzten Drucks in den Zellen der Batterie, was durch den Druckwächter erfaßt wird.

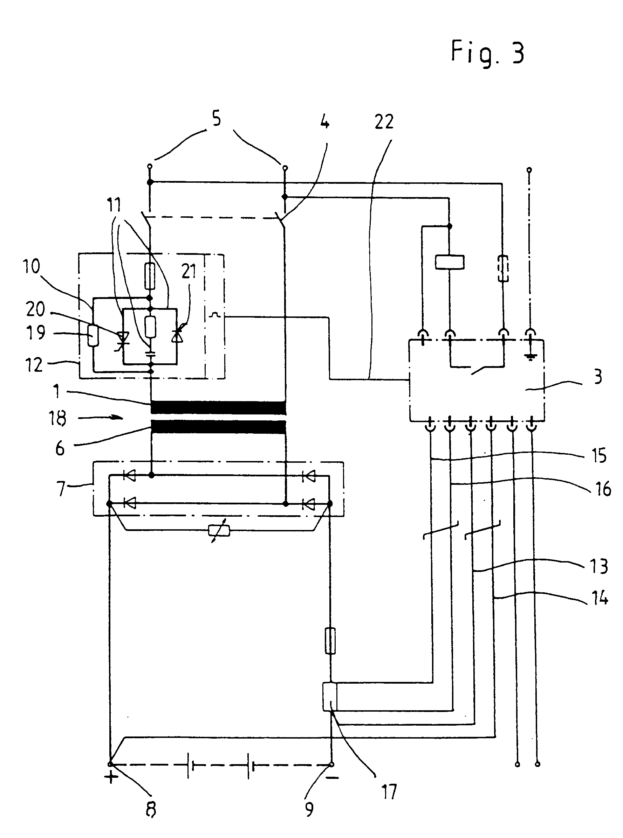

Das in der Fig. 3 dargestellte Ausführungsbeispiel einer Schaltung eines Batterieladegerätes unterscheidet sich von dem Ausführungsbeispiel gemäß Fig. 2 dadurch, daß sich der Schalter 12 auf der Primärseite 1 des Spannungsumwandlers, in diesem Fall eines Transformators 18, befindet. Wieder ist der erste, mit einem Widerstand 19 versehene Strompfad 10 nicht schaltbar, während der zweite Strompfad 11 durch zwei antiparallel geschaltete Thyristoren 20,21 in Abhängigkeit von Signalen 22 der Kontrolleinheit 3 zu- beziehungsweise abschaltbar ist.

### Bezugszeichenliste

- 1: Primärseite
- 2: Spannungskonstanthalter
- 3: Kontrolleinheit
- 4: Netzschütz
- 5: Netzspannung
- 6: Sekundärseite
- 7: Gleichrichterbrücke
- 8: Batterieklemme
- 9: Batterieklemme
- 10: Strompfad
- 11: Strompfad
- 12: Schalter
- 13: Leitung
- 14: Leitung
- 15: weitere Leitung
- 16: weitere Leitung
- 17: Meßwiderstand
- 18: Transformator
- 19: Widerstand
- 20: Thyristor
- 21: Thyristor
- 22: Signale
- I: Ladestrom
- t_{K}: Dauer der ersten Ladephase
- t_{N}: Dauer der Nachladephase
- t_{P}: Dauer der Pulsationsphase
- tₒ: Anstiegszeit der Batteriespannung
- tᵤ: Abfallzeit der Batteriespannung
- tᵤ: ₘₐₓ maximale Einschaltzeit des Ladestromes mit unterem Wert
- U: Batteriespannung
- U_{oG}: obere Grenzspannung
- U_{uG}: untere Grenzspannung

## Patentansprüche

1. Verfahren zum Laden von wiederaufladbaren Batterien mittels eines Ladegerätes und insbesondere zum Laden von Bleiakkumulatoren, vorzugsweise in wartungsfreier, verschlossener Ausführung, bei dem
zu Beginn des Ladevorganges nach den Einschalten des Ladegerätes das Aufladen der Batterie zunächst mit einem oberen Wert des Ladestromes (I) erfolgt, bis nach Erreichen einer oberen, unterhalb der Gasungsspannung liegenden Grenzspannung (U_{oG}) der Batterie der Ladestrom (I) auf einen unteren Wert abgesenkt wird,
der Ladestrom (I) wieder auf den oberen, mit zunehmender Ladung leicht abfallenden Wert angehoben wird, sobald die infolge der Absenkung des Ladestromes (I) sinkende Batteriespannung einen unteren Grenzwert (U_{uG}) erreicht hat,
diese Vorgänge wiederholt werden, wobei sich mit zunehmender Ladezeit (t) in dieser Pulsationsphase selbsttätig die jeweilige Dauer der Einschaltzeit (tₒ) des Ladestromes (I) mit dem oberen Wert verringert und die jeweilige Dauer der Einschaltzeit (tᵤ) des Ladestromes (I) mit dem unteren Wert erhöht,
bei Erreichen einer bestimmten Einschaltzeit (tᵤₘₐₓ) des Ladestromes mit unterem Wert die Pulsationsphase endet und eine Nachladephase (tₙ) einsetzt, während der ein Nachladen mit dem unteren Wert des Ladestromes (I) für eine vorgegebene Nachladezeit (tₙ) erfolgt, bis der Ladestrom (I) schließlich vollständig abgeschaltet wird.

2. Verfahren nach Anspruch 1, dadurch gekennzeichnet, daß der Ladevorgang sowohl bis zum Erreichen der oberen Gasungsspannung als auch in der Pulsationsphase mit ungeregelter Kennlinie erfolgt.

3. Verfahren nach Anspruch 1, dadurch gekennzeichnet, daß die Steuerung der oberen und unteren Grenzwerte (U_{oG},U_{uG}) in Abhängigkeit von der Temperatur der Batterie erfolgt.

4. Verfahren nach Anspruch 1, dadurch gekennzeichnet, daß die Dauer der Einschaltzeit des Ladestromes mit unterem Wert, bei deren Erreichen die Pulsationsphase beendet wird, von der Pulsfrequenz abhängt.

5. Verfahren nach Anspruch 1, dadurch gekennzeichnet, daß die Länge der Nachladezeit (t_{N}) von der Pulsfrequenz abhängt.

6. Verfahren nach einem der vorangehenden Ansprüche, gekennzeichnet durch in der Batterie angeordnete Druckwächter zur Begrenzung der Ladezeit durch Abschalten des Ladevorganges.

7. Verfahren nach Anspruch 1, dadurch gekennzeichnet, daß die Nachladung mit einer stabilisierten W-Kennlinie erfolgt und das Abschaltsignal dann gebildet wird, wenn der Ladestrom sich nicht mehr ändert.

8. Verfahren nach Anspruch 1, dadurch gekennzeichnet, daß die Länge der Nachladezeit (t_{N}) in Abhängigkeit der Hauptladezeit (t_{K} + t_{P}) veränderbar ist.

9. Verfahren nach Anspruch 1, dadurch gekennzeichnet, daß die während der Nachladezelt eingeladene Strommenge gemessen wird und nach Erreichen eines bestimmten Wertes die Abschaltung erfolgt.

## Claims

1. Method for charging rechargeable batteries by means of a charger, and particularly for charging lead accumulators, preferably in maintenance-free, closed construction, in which
at the beginning of the charging process, after the charger has been switched on, the battery is first charged with an upper value of the charging current (I) until the charging current (I) is lowered to a lower value after reaching an upper limit voltage (U_{oG}), located below the gassing voltage, of the battery,
the charging current (I) is raised again to the upper value, slightly dropping with increasing charge, as soon as the battery voltage, dropping due to the lowering of the charging current (I), has reached a lower limit value (U_{uG}),
these processes are repeated, wherein the respective duration of the switching-on time (tₒ) of the charging current (I) with the upper value is automatically reduced with increasing charging time (t) in this pulsation phase and the respective duration of the switching-on time (tᵤ) of the charging current (I) with the lower value is automatically increased,
when a particular switching-on time (tᵤₘₐₓ) of the charging current with the lower value is reached, the pulsation phase ends and a recharging phase (t_{N}) starts, during which a recharging with the lower value of the charging current (I) occurs for a predetermined recharging time (t_{N}) until the charging current (I) is finally completely switched off.

2. Method according to Claim 1, characterised in that the charging process takes place with unregulated characteristic both until the upper gassing voltage is reached and in the pulsation phase.

3. Method according to Claim 1, characterised in that the upper and lower limit values (U_{oG}, U_{uG}) are controlled in dependence on the temperature of the battery.

4. Method according to Claim 1, characterised in that the duration of the switching-on time of the charging current with the lower value, on reaching which the pulsation phase is ended, depends on the pulse frequency.

5. Method according to Claim 1, characterised in that the length of the recharging time (t_{N}) depends on the pulse frequency.

6. Method according to one of the preceding claims, characterised by pressure-operated switches arranged in the battery for limiting the charging time by switching off the charging process.

7. Method according to Claim 1, characterised in that the recharging takes place with a stabilised resistance characteristic and the switching-off signal is formed when the charging current no longer changes.

8. Method according to Claim 1, characterised in that the length of the recharging time (t_{N}) is variable in dependence on the main charging time (t_{K} + t_{P}).

9. Method according to Claim 1, characterised in that the amount of current charged during the recharging time is measured and switching-off is effected after a particular value has been reached.

## Revendications

1. Procédé de charge de batteries rechargeables au moyen d'un chargeur et, en particulier, de charge d'accumulateurs au plomb, de préférence dans une version fermée ne réclamant pas d'entretien, dans lequel
au début de l'opération de charge, après la mise en marche du chargeur, la charge de la batterie s'effectue d'abord avec une valeur supérieure du courant de charge (I), jusqu'à ce que ce dernier soit ramené à une valeur inférieure dès lors qu'une tension limite supérieure (U_{oG}) de la batterie, située en-dessous de la tension de dégagement gazeux, est atteinte,
le courant de charge (I) est à nouveau porté à la valeur supérieure, qui baisse légèrement à mesure que la charge augmente, dès que la tension de la batterie, qui diminue par suite de la baisse du courant de charge (I), a atteint une valeur limite inférieure (U_{uG}),
ces opérations sont répétées et, à mesure que le temps de charge augmente, au cours de cette phase de pulsation, la durée respective du temps de mise en circuit (tₒ) du courant de charge (I) à valeur supérieure diminue automatiquement et la durée respective du temps de mise en circuit (tᵤ) du courant de charge (I) à valeur inférieure augmente automatiquement,
lorsqu'un certain temps de mise en circuit (t_{u max}) du courant de charge à valeur inférieure est atteint, la phase de pulsation prend fin et une phase de charge d'appoint (t_{N}) débute, au cours de laquelle a lieu une charge d'appoint avec la valeur inférieure du courant de charge (I) pendant un temps prédéfini de charge d'appoint (t_{N}), jusqu'à ce que le courant de charge (I) soit finalement complètement coupé.

2. Procédé selon la revendication 1, caractérisé en ce que l'opération de charge s'effectue avec une courbe caractéristique de charge non régulée, aussi bien jusqu'à ce que la tension supérieure de dégagement gazeux soit atteinte que pendant la phase de pulsation.

3. Procédé selon la revendication 1, caractérisé en ce que la commande des valeurs limites supérieure et inférieure (U_{oG}, U_{uG}) s'effectue en fonction de la température de la batterie.

4. Procédé selon la revendication 1, caractérisé en ce que la durée du temps de mise en circuit du courant de charge à valeur inférieure, la phase de pulsation étant terminée lorsque ledit temps de mise en circuit est atteint, est fonction de la fréquence des pulsations.

5. Procédé selon la revendication 1, caractérisé en ce que la longueur du temps de charge d'appoint (t_{N}) est fonction de la fréquence des pulsations.

6. Procédé selon l'une des revendications précédentes, caractérisé par des dispositifs de surveillance de pression qui sont intégrés à la batterie pour limiter le temps de charge en interrompant l'opération de charge.

7. Procédé selon la revendication 1, caractérisé en ce que la charge d'appoint s'effectue avec une courbe caractéristique de résistance stabilisée et le signal d'interruption est formé lorsque le courant de charge ne varie plus.

8. Procédé selon la revendication 1, caractérisé en ce qu'il est possible de faire varier la longueur du temps de charge d'appoint (t_{N}) en fonction du temps de charge principal (t_{K} + t_{P}).

9. Procédé selon la revendication 1, caractérisé en ce que la quantité de courant accumulée pendant le temps de charge d'appoint est mesurée, et l'interruption intervient dès qu'une valeur déterminée est atteinte.
